# EUROPEAN PATENT APPLICATION

(11) **EP 4 261 927 A1**
(43) Date of publication of application: **18.10.2023**
(21) Application number: 22791048.6
(22) Date of filing: 20.04.2022
(51) Int. Cl.: H01M 4/13, H01M 10/0525, H01M 10/0587, H01M 50/536

(54) **BATTERY**

(30) Priority: 20.04.2021 CN 202110426732
(71) Applicant: Zhuhai CosMX Battery Co., Ltd., Zhuhai, Guangdong 519180 (CN)
(72) Inventor: ZHANG, Baohai, Zhuhai, Guangdong 519180 (CN); PENG, Chong, Zhuhai, Guangdong 519180 (CN); LI, Junyi, Zhuhai, Guangdong 519180 (CN)
(74) Representative: Murgitroyd & Company
(86) International application number: PCT/CN2022/087813
(87) International publication number: WO 2022/222941

(57) **Abstract**

Disclosed is a battery, and the battery includes a jelly roll. The jelly roll includes a first electrode plate, a separator, and a second electrode plate that are wound, the separator is located between the first electrode plate and the second electrode plate which are adjacent to each other, the first electrode plate is provided with a first tab, and the second electrode plate is provided with a second tab; the first tab is close to a first bending portion of a first end of the jelly roll, the second tab is close to a second bending portion of a second end of the jelly roll, a winding tail end of the jelly roll covers the first bending portion, and the winding tail end of the jelly roll extends in a direction from the first bending portion to the second bending portion; and an outer side of the jelly roll includes a first outer adhesive paper, a region between a head of the second end of the jelly roll and the second tab directly faces a first portion of the jelly roll, and the first outer adhesive paper covers at least one side surface of the first portion. Because the first outer adhesive paper has a specific thickness, a thickness of the jelly roll at the first outer adhesive paper may be increased. Therefore, the battery provided in the embodiments resolves a technical problem that a surface flatness of a jelly roll structure in a lithium-ion battery is relatively poor.

## Description

### CROSS-REFERENCE TO RELATED APPLICATIONS

This application claims priority to Chinese Patent Application No. 202110426732.7, filed with the Chinese National Intellectual Property Administration on April 20, 2021 and entitled "BATTERY", which is incorporated herein by reference in its entirety.

### TECHNICAL FIELD

The present application relates to battery technologies, and in particular, to a battery.

### BACKGROUND

Lithium-ion batteries have advantages of large capacity, small energy density, small size, light weight, green environmental protection and the like, and are widely used in industries such as digital electronic products and electric vehicles.

Currently, a jelly roll of a lithium-ion battery is generally formed by winding a positive electrode plate, a negative electrode plate, and a separator, and two tabs are respectively disposed on the positive electrode plate and the negative electrode plate.

However, a surface flatness of a jelly roll structure in an existing lithium-ion battery is relatively low, which causes a problem of expansion, in a cycle process, of the lithium-ion battery, and shortens a cycle life of the lithium-ion battery.

### SUMMARY

In view of this, embodiments of the present application provide a battery, so as to resolve a technical problem that a thickness difference between two ends in a width direction of an existing jelly roll is relatively large, causing a lithium-ion battery to expand in a cycle process and shortening a cycle life of the lithium-ion battery.

Embodiments of the present application provide a battery, including: a jelly roll, where the jelly roll includes a first electrode plate, a separator, and a second electrode plate that are wound, the separator is located between the first electrode plate and the second electrode plate which are adjacent to each other, the first electrode plate is provided with a first tab, and the second electrode plate is provided with a second tab;
the first tab is close to a first bending portion of a first end of the jelly roll, the second tab is close to a second bending portion of a second end of the jelly roll, a winding tail end of the jelly roll covers the first bending portion, and the winding tail end of the jelly roll extends in a direction from the first bending portion to the second bending portion; and
an outer side of the jelly roll includes a first outer adhesive paper, a region between ahead of the second end of the jelly roll and the second tab directly faces a first portion of the jelly roll, and the first outer adhesive paper covers at least one side surface of the first portion.

In this setting, an adhesive paper is disposed on a side surface of an outer side of a second end of the jelly roll. Because the adhesive paper has a specific thickness, a thickness of the second end of the jelly roll may be increased. Therefore, a flatness of the jelly roll is partially improved, and interface adhesion of the battery is better, thereby avoiding an expansion problem and a deformation problem caused by unevenness of the battery, and prolonging a long cycle life of the battery.

In some embodiments that may include the foregoing embodiments, a recessed portion is disposed on a surface, away from the jelly roll, of the first outer adhesive paper, and the recessed portion is opposite to the second bending portion.

In some embodiments that may include the foregoing embodiments, a thickness of the recessed portion gradually increases from a middle region of the recessed portion to both sides of the recessed portion; and/or
a thickness of a middle region of the recessed portion is greater than or equal to 3 µm and less than or equal to 8 µm.

In some embodiments that may include the foregoing embodiments, a region between a bottom edge of the first tab and the second tab and a bottom surface of the jelly roll directly faces a second portion of the jelly roll, one end of the second portion is aligned with an end, away from the second tab, of the first tab, and the other end of the second portion is aligned with an end, away from the first tab, of the second tab; and
the outer side of the jelly roll further includes a second outer adhesive paper, and the second outer adhesive paper covers at least one side surface of the second portion.

In some embodiments that may include the foregoing embodiments, the second outer adhesive paper covers two side surfaces of the second portion and a bottom surface of the second portion, and a difference obtained by subtracting twice a distance between a bottom edge of the first tab and the second tab and the bottom surface of the jelly roll and then subtracting a thickness of the jelly roll from a total length of the second outer adhesive paper is greater than or equal to - 10 mm and less than or equal to 10 mm; and/or
a difference obtained by subtracting a thickness of the first tab or the second tab from twice a thickness of the second outer adhesive paper is greater than or equal to -5 µm and less than or equal to 5 µm.

In some embodiments that may include the foregoing embodiments, a gap is formed between projections of the first tab and the second tab on a side surface of the jelly roll, and a region between the first tab and the second tab directly faces a third portion of the jelly roll; and
the outer side of the jelly roll further includes a third outer adhesive paper, and the third outer adhesive paper covers at least one side surface of the third portion.

In some embodiments that may include the foregoing embodiments, the third outer adhesive paper covers two side surfaces of the third portion and a top surface of the third portion, and a difference obtained by subtracting twice a length of a welding section of the first tab or the second tab and then subtracting a thickness of the jelly roll from a total length of the third outer adhesive paper is greater than or equal to -10 mm and less than or equal to 10 mm; and/or
a difference obtained by subtracting a thickness of the first tab or the second tab from twice a thickness of the third outer adhesive paper is greater than or equal to -5 µm and less than or equal to 5 µm.

In some embodiments that may include the foregoing embodiments, the first electrode plate is a positive electrode plate, the first tab is a positive tab, the positive electrode plate includes a positive electrode current collector and a positive electrode active layer, the positive electrode active layer is coated on two opposite surfaces of the positive electrode current collector, two surfaces of a winding head end of the positive electrode plate are exposed to form a positive electrode region uncoated with foil, the positive tab is disposed in the positive electrode region uncoated with foil, a first positive tab adhesive paper covers a surface of the positive tab, a second positive tab adhesive paper covers a surface, away from the positive tab, of the positive electrode plate, and the first positive tab adhesive paper is disposed opposite to the second positive tab adhesive paper.

In some embodiments that may include the foregoing embodiments, an inner side of the jelly roll includes a first inner adhesive paper, two opposite surfaces of the positive electrode region uncoated with foil are both provided with the first inner adhesive paper, and one end of each of two first inner adhesive papers covers a head end of the positive electrode active layer;
the other end of each of the two first inner adhesive papers is respectively connected to an end, away from the second tab, of each of the first positive tab adhesive paper and the second positive tab adhesive paper; or
the first positive tab adhesive paper and the first inner adhesive paper located on one surface of the positive electrode plate are integrally formed, and the second positive tab adhesive paper and the first inner adhesive paper located on the other surface of the positive electrode plate are integrally formed.

In some embodiments that may include the foregoing embodiments, the first electrode plate is a positive electrode plate, the first tab is a positive tab, the positive electrode plate includes a positive electrode current collector and a positive electrode active layer, an inner side of the jelly roll further includes second inner adhesive papers, one end of each of the second inner adhesive papers respectively covers an tail end of each of two surfaces of the positive electrode active layer, and a distance between projections, on a side surface of the jelly roll, of the other end of each of the second inner adhesive papers and an end, away from the second tab, of the positive tab is greater than or equal to 0 mm and less than or equal to 3 mm.

In some embodiments that may include the foregoing embodiments, a tail end of the positive electrode plate further includes a double-sided exposed tail end region uncoated with foil, the tail end region uncoated with foil and a tail end of the separator form a winding tail end of the jelly roll, and a gap is formed between a tail end of the jelly roll and an edge of the first outer adhesive paper, or a tail end of the jelly roll is connected to an edge of the first outer adhesive paper; and
a difference obtained by subtracting twice a thickness of the first outer adhesive paper from a sum of thicknesses of the positive tab, the first positive tab adhesive paper, the second positive tab adhesive paper, twice a thickness of the positive electrode current collector, and twice a thickness of the separator is greater than or equal to -5 µm and less than or equal to 5 µm.

In some embodiments that may include the foregoing embodiments, an end portion of a winding head end of the positive electrode region uncoated with foil extends to a region between the positive tab and the second tab, a protective adhesive paper is disposed on each of two opposite sides of the winding head end of the positive electrode region uncoated with foil, and two protective adhesive papers are located in a region between the positive tab and the second tab.

A battery provided in the embodiments includes a jelly roll, the jelly roll includes a first electrode plate, a separator, and a second electrode plate that are wound, the separator is located between the first electrode plate and the second electrode plate which are adjacent to each other, the first electrode plate is provided with a first tab, and the second electrode plate is provided with a second tab; the first tab is close to a first bending portion of a first end of the jelly roll, the second tab is close to a second bending portion of a second end of the jelly roll, a winding tail end of the jelly roll covers the first bending portion, and the winding tail end of the jelly roll extends in a direction from the first bending portion to the second bending portion; and an outer side of the jelly roll includes a first outer adhesive paper, a region between a head of the second end of the jelly roll and the second tab directly faces a first portion of the jelly roll, and the first outer adhesive paper covers at least one side surface of the first portion. Because the first outer adhesive paper has a specific thickness, a thickness of the jelly roll at the second end coated with an adhesive paper may be increased. This improves a flatness of the jelly roll, improves an interface bonding effect of the jelly roll after formation, and finally implements purposes of improving a long cycle life, an expansion problem, and a deformation problem of the battery. Therefore, the battery provided in the embodiments resolves a technical problem that a thickness difference between two ends in a width direction of a jelly roll structure in an existing lithium-ion battery is relatively large, which causes problems such as expansion of a lithium-ion battery during a cycle process, shortening a cycle life of the lithium-ion battery.

### BRIEF DESCRIPTION OF THE DRAWINGS

FIG. 1 is a top view of a jelly roll in a battery according to an embodiment of the present application.
FIG. 2 is a front view of a jelly roll with an adhesive paper attached to an outer side of the jelly roll in a battery according to an embodiment of the present application.
FIG. 3 is a front view of an outer side surface of a jelly roll in a battery according to an embodiment of the present application.
FIG. 4 is a structural diagram of a first outer adhesive paper according to an embodiment of the present application.
FIG. 5 is a cross-sectional view taken along the line A-A in FIG. 2.
FIG. 6 is an enlarged view of a central area of the jelly roll in FIG. 1.
FIG. 7 is a front view of a positive electrode plate in a battery according to an embodiment of the present application.
FIG. 8 is a top view of a positive electrode plate in a battery according to an embodiment of the present application.
FIG. 9 is a top view of a location for thickness data collection of a battery according to an embodiment of the present application.
FIG. 10 is a side view of a location for thickness data collection of a battery according to an embodiment of the present application.

### Reference numerals:

1: jelly roll;
10: first electrode plate;
20: second electrode plate;
30: first tab;
40: second tab;
110: positive electrode current collector;
120: positive electrode active layer;
130: positive electrode region uncoated with foil;
140: tail end region uncoated with foil;
150: protective adhesive paper;
210: negative electrode current collector;
220: negative electrode active layer;
230: negative electrode region uncoated with foil;
320: first positive tab adhesive paper;
330: second positive tab adhesive paper;
420: negative tab adhesive paper;
510: third outer adhesive paper;
520: second outer adhesive paper;
530: first outer adhesive paper;
531: recessed portion;
610: first inner adhesive paper;
620: second inner adhesive paper;
710: third portion;
720: second portion;
730: first portion.

### DETAILED DESCRIPTIONS OF THE EMBODIMENTS

Terms used in implementations of the present application are merely used to explain specific embodiments of the present application, and are not intended to limit the present application.

A lithium-ion battery is a secondary battery (a rechargeable battery), which mainly relies on movement of lithium ions between a positive electrode and a negative electrode to work, and energy density, a fast charging capability, a charge-discharge ratio, and the like of the lithium-ion battery affect performance of the lithium-ion battery.

In a related technology, whether interface bonding of the lithium-ion battery is well depends on whether pressure of the lithium-ion battery is uniform in a process of formation, and whether the pressure of the lithium-ion battery is uniform in the process of formation depends on whether a flatness of a whole jelly roll is good in a process of designing a jelly roll. If the flatness of the jelly roll is poor, the pressure on an electrode plate may be uneven during the process of formation, resulting in problems such as unevenness, depression, and wave deformation of a surface of the jelly roll. During a long cycle, due to a flatness problem of the jelly roll, stress on the jelly roll is uneven during a cycle expansion process, resulting in expansion deformation of the jelly roll, and resulting in capacity fading and expansion failure. In a width direction of the jelly roll, the jelly roll may include a first end and a second end. A tail end of the jelly roll covers a first end of the jelly roll, and extends from the first end to the second end.

However, factors such as a position of a tail end of the jelly roll, a structure of a positive electrode plate / a negative electrode plate, a structure of a positive tab / a negative tab, a welding position of a positive tab / a negative tab, and a setting manner of a separator cause different thicknesses of different parts of the battery. In particular, a thickness of a second end of the jelly roll is relatively small, and a flatness of the battery jelly roll is relatively poor, thereby affecting an interface bonding effect of the battery after formation, aggravating expansion problem and deformation problem of the battery, and shortening a long cycle life of the battery.

To resolve the foregoing technical problem, an embodiment provides a battery with an adhesive paper disposed on a side surface of an outer side of a second end of a jelly roll. Because the adhesive paper has a specific thickness, a thickness of the second end of the jelly roll may be increased. Therefore, a flatness of the jelly roll is partially improved, and interface adhesion of the battery is better, thereby avoiding an expansion problem and a deformation problem caused by unevenness of the battery, and prolonging a long cycle life of the battery.

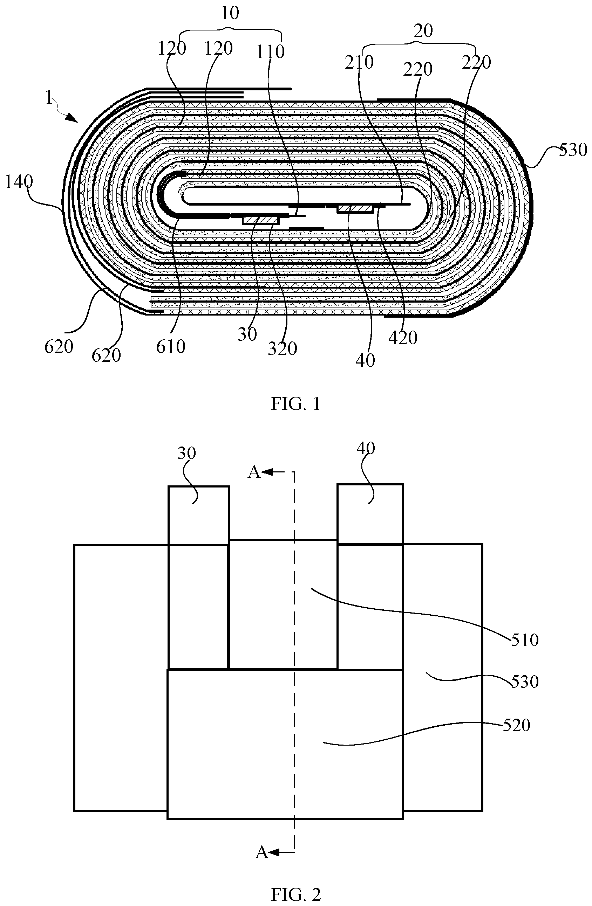

As shown in FIG. 1, an embodiment provides a battery, including a jelly roll 1. The jelly roll 1 includes a first electrode plate 10, a separator (not shown), and a second electrode plate 20 that are wound, the separator is located between the first electrode plate 10 and the second electrode plate 20 which are adjacent to each other, a first tab 30 is disposed on the first electrode plate 10, and a second tab 40 is disposed on the second electrode plate 20.

Specifically, the first electrode plate 10 may be a positive electrode plate, the first tab 30 may be a positive tab, the second electrode plate 20 may be a negative electrode plate, and the second tab 40 may be a negative tab.

Alternatively, the first electrode plate 10 may be a negative electrode plate, the first tab 30 may be a negative tab, the second electrode plate 20 may be a positive electrode plate, and the second tab 40 may be a positive tab, which is not limited herein.

The first tab 30 is close to a first bending portion of the jelly roll 1, the first bending portion is located at a first end of the jelly roll 1, the second tab 40 is close to a second bending portion of the jelly roll 1, and the second bending portion is located at a second end of the jelly roll 1.

A winding tail end of the jelly roll 1 covers the first bending portion, and the winding tail end of the jelly roll 1 extends in a direction from the first bending portion to the second bending portion. A first end of the jelly roll 1 is covered by a tail end of the jelly roll 1, and a second end of the jelly roll 1 is not covered by the tail end of the jelly roll 1. Factors such as a position of the tail end of the jelly roll 1, structures of two electrode plates, structures of two tabs, welding positions of the two tabs, and a setting manner of the separator cause different thicknesses of different parts of the battery, especially a thickness of the second end of the jelly roll 1 is relatively small, resulting in a relatively poor flatness of the jelly roll 1 of the battery.

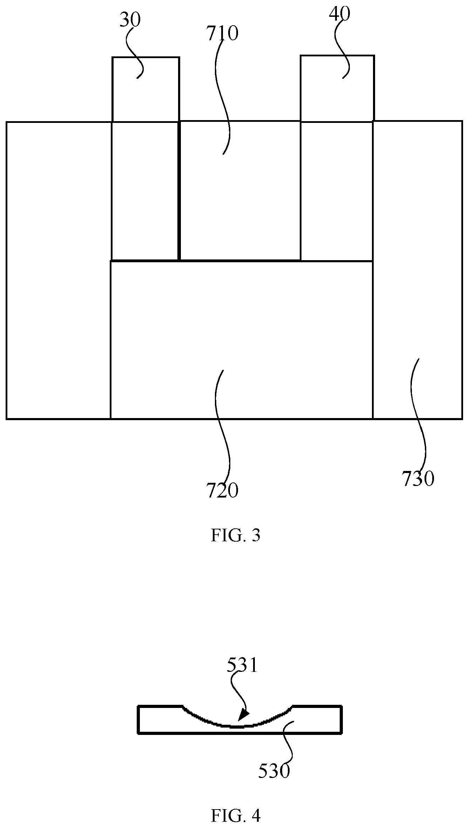

Referring to FIG. 2 and FIG. 3, a region between a head of the second end of the jelly roll 1 and the second tab 40 directly faces a first portion 730 of the jelly roll 1. In order to make a smooth transition between the first end and the second end of the jelly roll 1, a first outer adhesive paper 530 may be disposed on an outer side of the jelly roll 1, and the first outer adhesive paper 530 covers at least one side surface of the first portion 730.

It should be noted that a side surface(s) of the jelly roll 1 refers to two surfaces relative to a thickness direction of the jelly roll 1.

Specifically, the first outer adhesive paper 530 may be attached to any side of an outer surface of the jelly roll 1, or the first outer adhesive paper 530 may be attached to two opposite sides of the outer surface of the jelly roll 1. For example, the first outer adhesive paper 530 may be wound from an outer surface of one side of the jelly roll 1 to an outer surface of the other side of the jelly roll 1 through the second bending portion, or the first outer adhesive paper 530 may be only attached to two opposite surfaces of the jelly roll 1. Because the first outer adhesive paper 530 has a specific thickness, a thickness of the jelly roll 1 at the first outer adhesive paper 530 may be increased, which improves a flatness of the jelly roll 1, improves the interface bonding effect of the jelly roll 1 after formation, and finally implements purposes of improving a long cycle life, an expansion problem, and a deformation problem of the battery.

On the other hand, the first tab 30 and the second tab 40 are disposed on an inner side of the jelly roll 1. Because the first tab 30 and the second tab 40 have a specific thickness, a side surface, facing the first tab 30 and the second tab 40, of the jelly roll 1 may bulge to the outer side of the jelly roll 1, resulting in a large thickness of the jelly roll 1 at the side surface, and a thickness of a remaining portion of the jelly roll 1 is relatively small, thereby causing uneven thickness of the jelly roll. In this case, when the first outer adhesive paper 530 is disposed, a thickness of a tab may be considered, which helps improve a flatness of the jelly roll 1.

The battery provided in this embodiment includes a jelly roll 1, the jelly roll 1 includes a first electrode plate 10, a separator, and a second electrode plate 20 that are wound, the separator is located between the first electrode plate 10 and the second electrode plate 20 which are adjacent to each other, the first electrode plate 10 is provided with a first tab 30, and the second electrode plate 20 is provided with a second tab 40; the first tab 30 is close to a first bending portion of a first end of the jelly roll 1, the second tab 40 is close to a second bending portion of a second end of the jelly roll 1, a winding tail end of the jelly roll 1 covers the first bending portion, and the winding tail end of the jelly roll 1 extends in a direction from the first bending portion to the second bending portion; and an outer side of the jelly roll 1 includes a first outer adhesive paper 530, a region between a head of the second end of the jelly roll 1 and the second tab 40 directly faces a first portion 730 of the jelly roll 1, and the first outer adhesive paper 530 covers at least one side surface of the first portion 730. Because the first outer adhesive paper 530 has a specific thickness, a thickness of the jelly roll 1 at the first outer adhesive paper 530 may be increased. This improves the flatness of the jelly roll 1, improves the interface bonding effect of the jelly roll 1 after formation, and finally implements purposes of improving a long cycle life, an expansion problem, and a deformation problem of the battery.

Therefore, the battery provided in this embodiment resolves a technical problem that a surface flatness of a jelly roll 1 structure in a lithium-ion battery is relatively low, which causes problems such as expansion of a lithium-ion battery during a cycle process, shortening a cycle life of the lithium-ion battery.

Further, referring to FIG. 1 and FIG. 4, a recessed portion 531 is disposed on a surface, away from the jelly roll 1, of the first outer adhesive paper 530, the recessed portion 531 faces an outer side of the jelly roll 1, and the recessed portion 531 is opposite to a bending outer side surface of the jelly roll 1, that is, the recessed portion 531 is opposite to a second bending portion. A middle region of the recessed portion 531 has a smaller thickness than regions at both ends of the recessed portion 531, and the recessed portion 531 directly faces the second bending portion of the jelly roll 1. In this setting, a corresponding thickness of the jelly roll 1 at the adhesive paper may be increased, but a width of the jelly roll 1 is not increased as much as possible. A width direction of an electrode plate is a length direction of the jelly roll 1, and a length direction of the electrode plate is a width direction of the jelly roll 1.

In order to realize a smooth transition of the first outer adhesive paper 530 from its middle region to its two ends, a thickness of the recessed portion 531 gradually increases from the middle region of the recessed portion 531 to both sides of the recessed portion 531. For example, a cross-sectional outline shape of the recessed portion 531 may be angular, or may be curved.

A thickness of the middle region of the recessed portion 531 is greater than or equal to 3 µm and less than or equal to 8 µm. For example, the thickness of the middle region of the recessed portion 531 may be set to 3 µm, 4 µm, 5 µm, 6 µm, 7µm, 8 µm, or may be set to any value between 3 µm to 8 µm, according to an actual requirement, which is not limited herein.

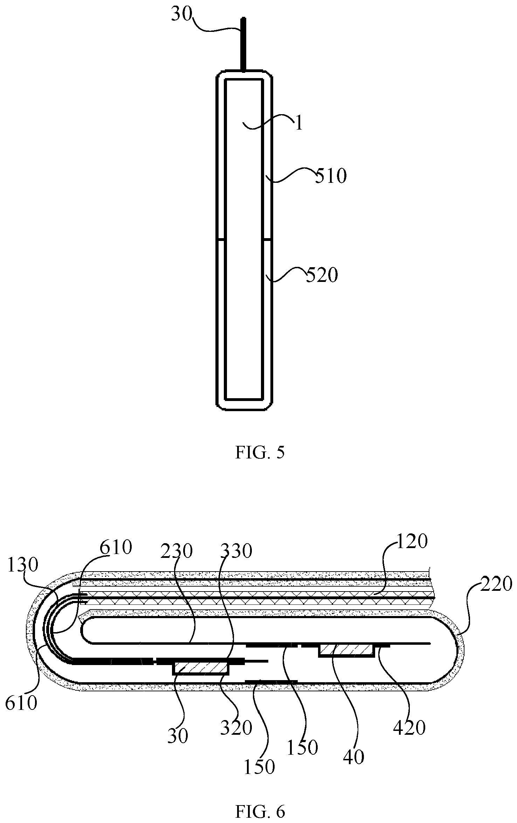

Referring to FIG. 3 and FIG. 5, in this embodiment, a region between a bottom edge of the first tab 30 and the second tab 40 and a bottom surface of the jelly roll 1 directly faces a second portion 720 of the jelly roll 1, one end of the second portion 720 is aligned with an end, away from the second tab 40, of the first tab 30, and the other end of the second portion 720 is aligned with an end, away from the first tab 30, of the second tab 40. In above, a bottom edge of both the first tab 30 and the second tab 40 is a side close to a bottom surface of the jelly roll 1.

Further, the outer side of the jelly roll 1 further includes a second outer adhesive paper 520, and the second outer adhesive paper 520 covers at least one side surface of the second portion 720. Specifically, the second outer adhesive paper 520 may be attached to either side of an outer surface of the jelly roll 1, or the second outer adhesive paper 520 may be attached to two opposite sides of the outer surface of the jelly roll 1.

The second outer adhesive paper 520 may be wound from an outer surface of one side of the jelly roll 1 to an outer surface of the other side of the jelly roll 1 through a bottom surface of the jelly roll 1, or may be only attached to two opposite surfaces of the jelly roll 1. Because the second outer adhesive paper 520 has a specific thickness, which helps improve a thickness of the second portion 720, so as to improve a flatness of the jelly roll 1.

Optionally, the second outer adhesive paper 520 may cover two side surfaces of the second portion 720 and a bottom surface of the second portion 720. This setting may not only increase a thickness of the jelly roll 1 in a region covered by the second outer adhesive paper 520, but also play a role in partially wrapping the jelly roll 1, so as to improve anti-dropping performance of a battery.

Optionally, a difference obtained by subtracting twice a distance between a bottom edge of the first tab 30 and the second tab 40 and the bottom surface of the jelly roll 1 and then subtracting a thickness of the jelly roll 1 from a total length of the second outer adhesive paper 520 is greater than or equal to -10 mm and less than or equal to 10 mm.

A length of the adhesive paper is along a length direction of the jelly roll, and a width of the adhesive paper is along a width direction of the jelly roll.

Optionally, a difference obtained by subtracting a thickness of the first tab 30 or the second tab 40 from twice a thickness of the second outer adhesive paper 520 is greater than or equal to -5 µm and less than or equal to 5 µm.

Optionally, a width of the second outer adhesive paper 520 is less than or equal to a width of the second portion 720, so as to ensure that the second outer adhesive paper 520 is located in a region of the second portion 720, thereby facilitating improving a flatness of the jelly roll 1.

In this embodiment, a gap is formed between projections of the first tab 30 and the second tab 40 on a side surface of the jelly roll 1, That is, the first tab 30 and the second tab 40 are disposed in a staggered manner in a width direction of the jelly roll 1, so as to avoid unevenness of the jelly roll 1 caused by a superposition of thickness of the first tab 30 and the second tab 40. A region between the first tab 30 and the second tab 40 directly faces a third portion 710 of the jelly roll 1.

Further, the outer side of the jelly roll 1 further includes a third outer adhesive paper 510, and the third outer adhesive paper 510 covers at least one side surface of the third portion 710.

Specifically, the third outer adhesive paper 510 may be attached to any side of an outer surface of the jelly roll 1, or the third outer adhesive paper 510 may be attached to two opposite sides of the outer surface of the jelly roll 1.

The third outer adhesive paper 510 may be wound from an outer surface of one side of the jelly roll 1 to an outer surface of the other side of the jelly roll 1 through a top surface of the jelly roll 1, or may be only attached to two opposite surfaces of the jelly roll 1. Because the third outer adhesive paper 510 has a specific thickness, which helps improve a thickness of the third portion 710, so as to improve a flatness of the jelly roll 1.

Optionally, the third outer adhesive paper 510 may cover two side surfaces of the third portion 710 and a top surface of the third portion 710. This setting may not only increase a thickness of the jelly roll 1 in a region covered by the third outer adhesive paper 510, but also play a role in partially wrapping the jelly roll 1, so as to improve anti-dropping performance of a battery.

Optionally, a difference obtained by subtracting twice a length of a welding section of the first tab 30 or the second tab 40 and then subtracting a thickness of the jelly roll 1 from a total length of the third outer adhesive paper 510 is greater than or equal to -10 mm and less than or equal to 10 mm.

Optionally, a difference obtained by subtracting a thickness of the first tab 30 or the second tab 40 from twice a thickness of the third outer adhesive paper 510 is greater than or equal to -5 µm and less than or equal to 5 µm.

Optionally, a width of the third outer adhesive paper 510 is less than or equal to a width of the third portion 710, so as to ensure that the third outer adhesive paper 510 is located in a region of the third portion 710, thereby facilitating improving a flatness of the jelly roll 1.

Referring to FIG. 1 and FIG. 6, in this embodiment, the first electrode plate 10 is a positive electrode plate, the first tab 30 is a positive tab, the positive electrode plate includes a positive electrode current collector 110 and a positive electrode active layer 120, and the positive electrode active layer 120 is coated on two opposite surfaces of the positive electrode current collector 110. For example, a material of the positive electrode current collector 110 may be an aluminum foil. Certainly, the positive electrode current collector 110 may also be made of another material according to an actual requirement, as long as a requirement of the jelly roll 1 can be met.

Two surfaces of a winding head end of the positive electrode plate are exposed to form a positive electrode region uncoated with foil 130, the positive tab is disposed in the positive electrode region uncoated with foil 130. To prevent a burr generated by welding the positive tab on the positive electrode current collector 110 from penetrating through a separator between two electrode plates, resulting in a short circuit of the battery, a surface of the positive tab may be covered with a first positive tab adhesive paper 320, a surface, away from the positive tab, of the positive electrode plate may be covered with a second positive tab adhesive paper 330, and the first positive tab adhesive paper 320 is disposed opposite to the second positive tab adhesive paper 330.

A size range of the positive tab in a width direction of the positive electrode plate may be 25 mm to 55 mm; a size range of the positive tab in a length direction of the positive electrode plate may be 5 mm to 10 mm; a thickness range of the positive tab may be 45 µm to 110 µm; a size range of the first positive tab adhesive paper 320 and the second positive tab adhesive paper 330 in a length direction of the positive electrode plate may be 10 mm to 20 mm; and a thickness range of the first positive tab adhesive paper 320 and the second positive tab adhesive paper 330 may be 5 µm to 16 µm.

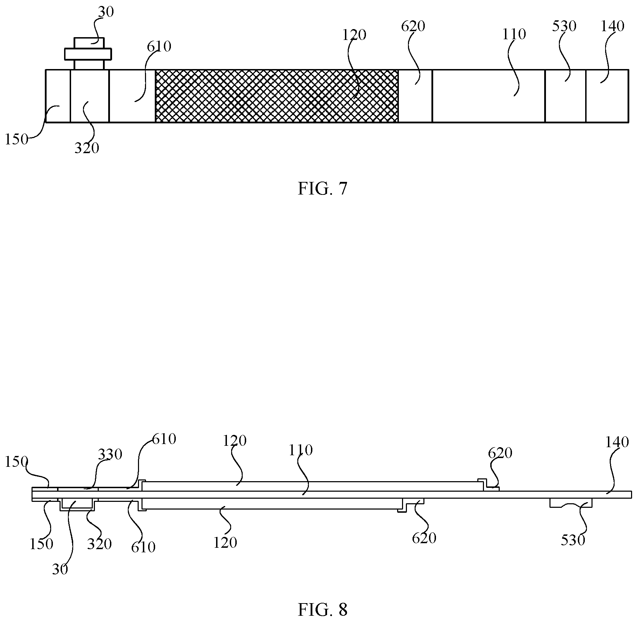

Referring to FIG. 6 to FIG. 8, in this embodiment, an inner side of the jelly roll 1 includes a first inner adhesive paper 610, two opposite surfaces of the positive electrode region uncoated with foil 130 are both provided with the first inner adhesive paper 610, and one end of each of two first inner adhesive papers 610 covers ahead end of the positive electrode active layer 120, so as to prevent a burr located at a coating head end of the positive electrode active layer 120 from penetrating through a separator between two electrode plates, resulting in a short circuit of the battery.

In a length direction of the positive electrode plate, the first inner adhesive paper 610 covers a head end of the positive electrode active layer 120 in a range of 1 mm-3 mm.

Optionally, the other end of each of the two first inner adhesive papers 610 is respectively connected to an end, away from the second tab 40, of each of the first positive tab adhesive paper 320 and the second positive tab adhesive paper 330, so that a thickness of the jelly roll 1 at one end, away from the second electrode 40, of the positive tab, is uniform, thereby facilitating improving a case in which a surface of the jelly roll 1 is uneven.

Optionally, the first positive tab adhesive paper 320 and the first inner adhesive paper 610 located on one surface of the positive electrode plate are integrally formed, that is, the first inner adhesive paper 610 located on a surface, provided with the first positive tab adhesive paper 320, of the positive electrode plate and the first positive tab adhesive paper 320 may be an integrated member.

Optionally, the second positive tab adhesive paper 330 and the first inner adhesive paper 610 located on the other surface of the positive electrode plate are integrally formed, that is, the first inner adhesive paper 610 located on a surface, away from the positive tab, of the positive electrode plate and the second positive tab adhesive paper 330 may be an integrated member.

Referring to FIG. 1 and FIG. 6, in this embodiment, the second electrode plate 20 may be a negative electrode plate, the second tab 40 may be a negative tab, the negative electrode plate includes a negative electrode current collector 210 and a negative electrode active layer 220, and the negative electrode active layer 220 is coated on two opposite surfaces of the negative electrode current collector 210. Two surfaces of a winding head end of the negative electrode plate are exposed to form a negative electrode region uncoated with foil 230, the negative tab is disposed in the negative electrode region uncoated with foil 230, and a surface of the negative tab is covered with a negative tab adhesive paper 420.

For example, a material of the negative electrode current collector 210 may be a copper foil. Certainly, the negative electrode current collector 210 may also be made of another material according to an actual requirement, as long as a requirement of the jelly roll 1 can be met.

A size range of the negative tab in a width direction of the negative electrode plate may be 25 mm to 55 mm; a size range of the negative tab in a length direction of the negative electrode plate may be 5 mm to 10 mm; a thickness range of the negative tab may be 45 µm to 110 µm; a size range of the negative tab adhesive paper 420 in a length direction of the negative electrode plate may be 10 mm to 20 mm; and a thickness range of the negative tab adhesive paper 420 may be 5 µm to 16 µm.

In this embodiment, an end portion of a winding head end of the positive electrode region uncoated with foil 130 extends to a region between the first tab 30 and the second tab 40, a protective adhesive paper 150 is disposed on each of two opposite sides of the winding head end of the positive electrode region uncoated with foil 130, and two protective adhesive papers 150 are located in a region between the first tab 30 and the second tab 40.

Optionally, one end of each of the two protective adhesive papers 150 may be connected respectively to one end, close to the negative tab, of each of the first positive tab adhesive paper 320 and the second positive tab adhesive paper 330, and the other end of each of the two protective adhesive papers 150 is connected to one end, close to the positive tab, of the negative tab adhesive paper 420.

The protective adhesive paper 150 may be attached to the negative electrode current collector 210 located on opposite sides of the positive electrode current collector 110, may be directly attached to the positive electrode current collector 110, or may be attached to a separator located on opposite sides of the positive electrode current collector 110. The protective adhesive paper 150 may prevent a burr at a cutting portion of the positive electrode current collector 110 from penetrating through the separator, resulting in an internal short circuit of the jelly roll 1, and may increase a thickness, between the first tab 30 and the second tab 40, of the jelly roll 1, so as to improve a case in which a surface of the jelly roll 1 is uneven.

In some embodiments, the first inner adhesive paper 610, the first positive tab adhesive paper 320, and the protective adhesive paper 150, which are located on a same side of the positive electrode current collector 110, may be a complete adhesive paper integrally formed, or two adjacent adhesive papers of which may be formed integrally and the other adhesive paper is separate, or all three adhesive papers of which are separate adhesive papers. A principle of the first inner adhesive paper 610, the second positive tab adhesive paper 330, and the protective adhesive paper 150 which are located on a same side of the positive electrode current collector 110, is similar to that above, and details are not described herein again.

In this embodiment, an inner side of the jelly roll 1 further includes second inner adhesive papers 620, and one end of each of the second inner adhesive papers 620 respectively covers an tail end of each of two surfaces of the positive electrode active layer 120, so as to prevent a burr located at a coating tail end of the positive electrode active layer 120 from penetrating through a separator between two electrode plates, resulting in a short circuit of the battery. A distance between a projection of the other end of the second inner adhesive paper 620 on a side surface of the jelly roll 1 and a projection of an end, away from the second tab 40, of the positive tab on the side surface of the jelly roll 1 is greater than or equal to 0 mm and less than or equal to 3 mm, so that a thickness of the jelly roll 1 located at an end, away from the second tab 40, of the positive tab is kept even, which helps improve a case in which a surface of the jelly roll 1 is uneven.

In a length direction of the positive electrode plate, a range of a tail end of the positive electrode active layer 120 covered by the second inner adhesive paper 620 is 1 mm-3 mm.

To avoid uneven surface thickness of the jelly roll 1 caused by disposing positions of a head end and a tail end of the positive electrode active layer 120, both the head ends and the tail ends of the positive electrode active layers 120 on both surfaces of the positive electrode plate may be disposed at a bending portion of the jelly roll 1, for example, a first bending portion. The first bending portion includes a starting end and an ending end of bending portion, that is, two ends of the positive electrode active layer 120 may be located at the starting end, the ending end, and any position between the two ends of the bending portion, and correspondingly, one end of each of two inner adhesive papers is also located at the starting end, the ending end, and any position between the two ends of the bending portion.

As shown in FIG. 1, a portion, covering a head end of the positive electrode active layer 120, of the first inner adhesive paper 610 is aligned with the ending end of the first bending portion, and a portion, covering a tail end of the positive electrode active layer 120, of the second inner adhesive paper 620 is aligned with the starting end of the first bending portion. Because each of bending portions at two ends of the jelly roll 1 is a curved smooth transition structure and a thickness of the bending portion is less than a thickness of a non-bending portion of the jelly roll, a structure located in the bending portion hardly affects a flatness of the jelly roll 1. Therefore, a thickness of the adhesive paper located at the bending portion may be ignored. In this case, a difference obtained by subtracting a sum of thicknesses of the positive tab, the first positive tab adhesive paper 320 and the second positive tab adhesive paper 330 from a sum of thicknesses of two first inner adhesive paper 610 and two second inner adhesive paper 620 is greater than or equal to -5 µm and less than or equal to 5 µm.

In this embodiment, thicknesses of the first inner adhesive papers 610 disposed on two opposite surfaces of the positive electrode current collector 110 may be the same, or may be different; and widths of the first inner adhesive papers 610 on the two surfaces may be the same, or may be different. The second inner adhesive paper 620 and the protective adhesive paper 150 are similar to the first inner adhesive paper, and details are not described herein again.

In this embodiment, a tail end of the positive electrode plate further includes a double-sided exposed tail end region uncoated with foil 140, the tail end region uncoated with foil 140 and a tail end (not shown) of the separator form a winding tail end of the jelly roll 1, and a tail end of the jelly roll 1 is connected to an edge of the first outer adhesive paper 530, or a gap is formed between a tail end of the jelly roll 1 and an edge of the first outer adhesive paper 530.

Optionally, when the tail end of the jelly roll 1 is located between the first tab 30 and the second tab 40, that is, the tail end of the jelly roll 1 is located between a projection of the first tab 30 on the side surface of the jelly roll 1 and a projection of the second tab 40 on the side surface of the jelly roll 1, because the third outer adhesive paper 510 is attached to the tail end of the jelly roll 1, the tail end of the jelly roll 1 may be prevented from warping and being separated from the jelly roll 1.

Optionally, the tail end of the jelly roll 1 is close to an edge of the first outer adhesive paper 530, and in addition to the third outer adhesive paper 510 may prevent the tail end of the jelly roll 1 from warping, an tail end adhesive paper may be separately attached to a head of the tail end of the jelly roll 1, so as to prevent the tail end of the jelly roll 1 from warping and being separated from the jelly roll 1. In addition, because the tail end of the jelly roll 1 is close to the edge of the first outer adhesive paper 530, a gap between the two is relatively small, thereby avoiding unevenness caused by a recess at a gap between the two.

Optionally, similarly, when the tail end of the jelly roll 1 is connected to an edge of the first outer adhesive paper 530, an tail end adhesive paper may also be separately attached to the tail end of the jelly roll 1, so as to prevent the tail end of the jelly roll 1 from warping and being separated from the jelly roll 1. Herein the tail end adhesive paper should be set as thin as possible to avoid its influence on thickness of the jelly roll 1.

In this case, a difference obtained by subtracting twice a thickness of the first outer adhesive paper 530 from a sum of thicknesses of the positive tab, the first positive tab adhesive paper 320, the second positive tab adhesive paper 330, twice a thickness of the positive electrode current collector 110, and twice a thickness of the separator is greater than or equal to -5 µm and less than or equal to 5 µm, thereby facilitating improving a case in which a surface of the jelly roll 1 is uneven.

In this embodiment, adhesive papers such as the first outer adhesive paper 530, the second outer adhesive paper 520, the third outer adhesive paper 510, the first inner adhesive paper 610, the second inner adhesive paper 620, each tab adhesive paper, and the protective adhesive paper 150 that are used may be divided into two layers. One layer of the adhesive paper is a substrate film layer, and the other layer of the adhesive paper is a glue layer. A material of the substrate film layer may be: CPP, OPP, BOPP, PE, PET, PVC, MOPP, etc., and a material of the glue layer may be: water glue, oil glue, hot melt glue, natural rubber, synthetic rubber, or the like. A thickness of the glue layer is 1 µm-5 µm, and may be 1 µm, 2 µm, 3 µm, 4 µm, or the like. This is not limited herein, and a thickness of the substrate may be selected according to a requirement.

In some embodiments, a difference obtained by subtracting a thickness of the negative tab from a thickness of the positive tab is greater than or equal to -5 µm and less than or equal to 5 µm.

Optionally, a difference obtained by subtracting a sum of thicknesses of the first positive tab adhesive paper 320 and the second positive tab adhesive paper 330 from a thickness of the negative tab adhesive paper 420 is greater than or equal to -5 µm and less than or equal to 5 µm.

Optionally, a difference between a thickness of a positive tab and a thickness of a negative tab is relatively large. In this case, thicknesses of the first positive tab adhesive paper 320, the second positive tab adhesive paper 330, and the negative tab adhesive paper 420 may be adjusted, so that a difference obtained by subtracting a sum of thickness of the negative tab and the negative tab adhesive paper 420 from a sum of thicknesses of the positive tab, the first positive tab adhesive paper 320 and the second positive tab adhesive paper 330 is greater than or equal to -5 µm and less than or equal to 5 µm, thereby making a thickness of a surface of the battery more uniform.

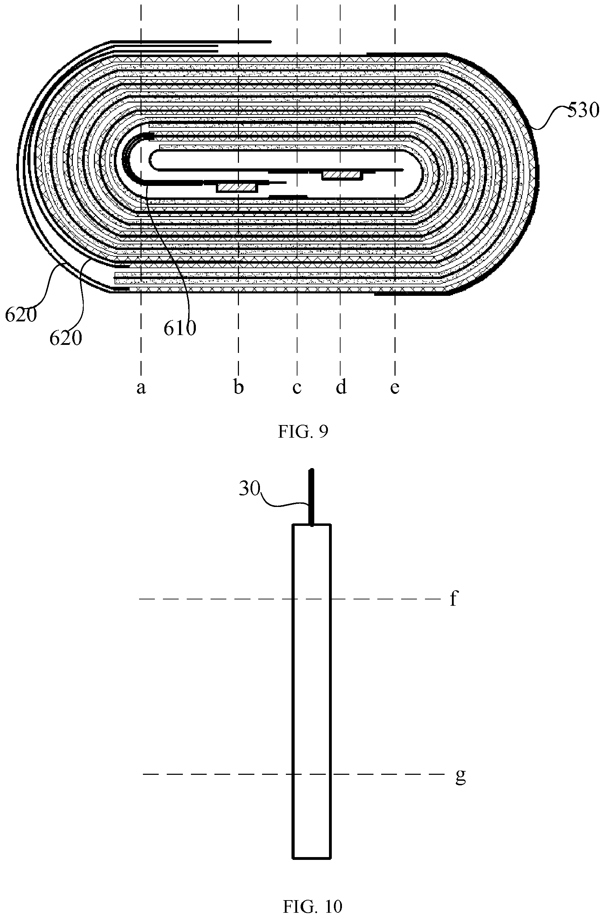

Three battery examples provided in this embodiment are compared with a battery comparative example not provided in this embodiment, where Table 1 shows a setting of parameters of the three examples and the comparative example, Table 2 shows a thickness distribution of different parts of the three examples and the comparative example, and FIG. 9 and FIG. 10 are diagrams illustrating locations for thickness data collection of a battery. Parameter setting and cyclic test data are shown in Table 1 and Table 2.

**Table 1**

| | Example 1 | Example 2 | Example 3 | Comparative Example |
|---|---|---|---|---|
| Tab thickness (µm) | 80 | 90 | 100 | 80 |
| Width (mm)/thickness (µm) of one first inner adhesive paper | 10/28 | 10/30.5 | 25.8/33 | 10/12 |
| Width (mm)/thickness (µm) of another first inner adhesive paper | 10/28 | 10/30.5 | 11/33 | 10/12 |
| Width (mm)/thickness (µm) of one second inner adhesive paper | 18.9/28 | 18.92/30.5 | 18.94/33 | 10/12 |
| Width (mm)/thickness (µm) of another second inner adhesive paper | 16.83/28 | 18.92/30.5 | 18.94/33 | 10/12 |
| Width (mm)/thickness (µm) of the first outer adhesive paper | 34.75/75 | 34.75/80 | 34.75/85 | / |
| Width (mm)/thickness (µm) /length (mm) of the second outer adhesive paper | 34/40/100 | 34/45/100 | 34/50/100 | / |
| Width (mm)/thickness (µm)/length (mm) of the third outer adhesive paper | 22/40/64 | 22/45/64 | 22/50/64 | / |
| Width /thickness (µm) of an adhesive paper between a bottom edge of each tab and a bottom of the jelly roll | / | / | / | 15/22 |

**Table 2**

| | Example 1 | Example 2 | Example 3 | Comparative Example |
|---|---|---|---|---|
| Thickness at a (mm) | 4.362 | 4.365 | 4.364 | 4.353 |
| Thickness at b (mm) | 4.362 | 4.364 | 4.365 | 4.360 |
| Thickness at c (mm) | 4.361 | 4.362 | 4.363 | 4.300 |
| Thickness at d (mm) | 4.361 | 4.363 | 4.363 | 4.300 |
| Thickness at e (mm) | 4.362 | 4.362 | 4.365 | 4.218 |
| Thickness at f (mm) | 4.364 | 4.363 | 4.364 | 4.345 |
| Thickness at g (mm) | 4.362 | 4.363 | 4.363 | 4.309 |
| Extreme deviation (flatness) | 0.003 | 0.003 | 0.002 | 0.142 |
| Cyclic capacity retention rate 800T/% | 83.27 | 82.92 | 83.01 | 75.35 |
| Electrochemical cell expansion 800T/% | 9.28 | 9.03 | 9.35 | 11.03 |

In the comparative example in Table 1, there are two adhesive papers between the bottom edge of each tab and the bottom surface of the jelly roll 1, one is an adhesive paper between the bottom edge of the positive tab and the bottom of the jelly roll 1, and the other is an adhesive paper between the bottom edge of the negative tab and the bottom of the jelly roll 1.

In this embodiment, a 3D high-resolution microscope is used to test the thickness in this test, and measurement may have an error due to an operation problem, but the error may be controlled within an error range of 0.01mm. In addition, in a battery preparation process, there is an error between a design value and an actual measurement value due to influence of factors such as a difference in a thickness of a coated electrode plate, but the error may be basically controlled within a range of 0.03mm.

It may be learned from the data in Table 1 and Table 2 that, by disposing adhesive papers such as the first outer adhesive paper 530, the second outer adhesive paper 520, and the third outer adhesive paper 510 on an outer side surface of the jelly roll 1, a thickness distribution of a battery may be effectively improved, and problems such as unevenness, depression, and wave deformation of a surface of the jelly roll caused by uneven stress of an electrode plate during a process of formation may be improved. A uniform formation pressure may also effectively improve a problem of poor adhesion of a separator, improve a problem of lithium precipitation caused by a poor adhesion between an electrode plate and a separator during a later period of cycle, improve a flatness of the jelly roll 1, and improve a problem of a cycle expansion failure.

According to a battery provided in this embodiment, problems, caused by a problem of uneven internal stress of an electrode plate during a cycle expansion process of the jelly roll 1 due to a flatness problem of the jelly roll 1 in a long cycle process, of a bonding cross-section failure of the jelly roll 1, expansion deformation of the jelly roll 1, capacity attenuation and expansion failure may be effectively improve, and a cycle life and safety performance of the battery may be improved. The jelly roll 1 is wrapped inside a battery case, and a positive electrode and a negative electrode of the battery are formed respectively by a positive tab and a negative tab. When the battery is applied to an electronic device, the positive electrode of the battery is connected to a positive electrode of the electronic device, and the negative electrode of the battery is connected to a negative electrode of the electronic device, so that the battery supplies power to the electronic device.

It should be noted herein that a value and a value range involved in the embodiments of the present application are approximate values, and there may be an error in a certain range due to influence of a manufacturing process, which may be considered to be ignored by a person skilled in the art.

Finally, it should be noted that the foregoing embodiments are merely used to describe the technical solutions of the present application, but are not limited thereto. Although the present application is described in detail with reference to the foregoing embodiments, a person of ordinary skill in the art should understand that modifications may be performed on the technical solutions of the foregoing embodiments described in the foregoing embodiments, or equivalent replacements may be performed on some or all of the technical features. However, these modifications or replacements do not make an essence of the corresponding technical solutions separate from the scope of the technical solutions in the embodiments of this application.

## Claims

1. A battery, comprising: a jelly roll, wherein the jelly roll comprises a first electrode plate, a separator, and a second electrode plate that are wound, the separator is located between the first electrode plate and the second electrode plate which are adjacent to each other, the first electrode plate is provided with a first tab, and the second electrode plate is provided with a second tab;
the first tab is close to a first bending portion of a first end of the jelly roll, the second tab is close to a second bending portion of a second end of the jelly roll, a winding tail end of the jelly roll covers the first bending portion, and the winding tail end of the jelly roll extends in a direction from the first bending portion to the second bending portion; and
an outer side of the jelly roll comprises a first outer adhesive paper, a region between a head of the second end of the jelly roll and the second tab directly faces a first portion of the jelly roll, and the first outer adhesive paper covers at least one side surface of the first portion.

2. The battery according to claim 1, wherein a recessed portion is disposed on a surface, away from the jelly roll, of the first outer adhesive paper, and the recessed portion is opposite to the second bending portion.

3. The battery according to claim 2, wherein a thickness of the recessed portion gradually increases from a middle region of the recessed portion to both sides of the recessed portion; and/or,
a thickness of a middle region of the recessed portion is greater than or equal to 3 µm and less than or equal to 8 µm.

4. The battery according to any one of claims 1 to 3, wherein a region between a bottom edge of the first tab and the second tab and a bottom surface of the jelly roll directly faces a second portion of the jelly roll, one end of the second portion is aligned with an end, away from the second tab, of the first tab, and the other end of the second portion is aligned with an end, away from the first tab, of the second tab; and
the outer side of the jelly roll further comprises a second outer adhesive paper, and the second outer adhesive paper covers at least one side surface of the second portion.

5. The battery according to claim 4, wherein the second outer adhesive paper covers two side surfaces of the second portion and a bottom surface of the second portion, and a difference obtained by subtracting twice a distance between a bottom edge of the first tab and the second tab and the bottom surface of the jelly roll and then subtracting a thickness of the jelly roll from a total length of the second outer adhesive paper is greater than or equal to -10 mm and less than or equal to 10 mm; and/or
a difference obtained by subtracting a thickness of the first tab or the second tab from twice a thickness of the second outer adhesive paper is greater than or equal to -5 µm and less than or equal to 5 µm.

6. The battery according to any one of claims 1 to 3, wherein a gap is formed between projections of the first tab and the second tab on a side surface of the jelly roll, and a region between the first tab and the second tab directly faces a third portion of the jelly roll; and
the outer side of the jelly roll further comprises a third outer adhesive paper, and the third outer adhesive paper covers at least one side surface of the third portion.

7. The battery according to claim 6, wherein the third outer adhesive paper covers two side surfaces of the third portion and a top surface of the third portion, and a difference obtained by subtracting twice a length of a welding section of the first tab or the second tab and then subtracting a thickness of the jelly roll from a total length of the third outer adhesive paper is greater than or equal to -10 mm and less than or equal to 10 mm; and/or
a difference obtained by subtracting a thickness of the first tab or the second tab from twice a thickness of the third outer adhesive paper is greater than or equal to -5 µm and less than or equal to 5 µm.

8. The battery according to any one of claims 1 to 3, wherein the first electrode plate is a positive electrode plate, the first tab is a positive tab, the positive electrode plate comprises a positive electrode current collector and a positive electrode active layer, the positive electrode active layer is coated on two opposite surfaces of the positive electrode current collector, two surfaces of a winding head end of the positive electrode plate are exposed to form a positive electrode region uncoated with foil, the positive tab is disposed in the positive electrode region uncoated with foil, a first positive tab adhesive paper covers a surface of the positive tab, a second positive tab adhesive paper covers a surface, away from the positive tab, of the positive electrode plate, and the first positive tab adhesive paper is disposed opposite to the second positive tab adhesive paper.

9. The battery according to claim 8, wherein an inner side of the jelly roll comprises a first inner adhesive paper, two opposite surfaces of the positive electrode region uncoated with foil are both provided with the first inner adhesive paper, and one end of each of two first inner adhesive papers covers a head end of the positive electrode active layer;
the other end of each of the two first inner adhesive papers is respectively connected to an end, away from the second tab, of each of the first positive tab adhesive paper and the second positive tab adhesive paper; or
the first positive tab adhesive paper and the first inner adhesive paper located on one surface of the positive electrode plate are integrally formed, and the second positive tab adhesive paper and the first inner adhesive paper located on the other surface of the positive electrode plate are integrally formed.

10. The battery according to any one of claims 1 to 3, wherein the first electrode plate is a positive electrode plate, the first tab is a positive tab, the positive electrode plate comprises a positive electrode current collector and a positive electrode active layer, an inner side of the jelly roll further comprises second inner adhesive papers, one end of each of the second inner adhesive papers respectively covers an tail end of each of two surfaces of the positive electrode active layer, and a distance between projections, on a side surface of the jelly roll, of the other end of each of the second inner adhesive papers and an end, away from the second tab, of the positive tab is greater than or equal to 0 mm and less than or equal to 3 mm.

11. The battery according to claim 8, wherein a tail end of the positive electrode plate further comprises a double-sided exposed tail end region uncoated with foil, the tail end region uncoated with foil and a tail end of the separator form a winding tail end of the jelly roll, and a gap is formed between a tail end of the jelly roll and an edge of the first outer adhesive paper, or a tail end of the jelly roll is connected to an edge of the first outer adhesive paper; and
a difference obtained by subtracting twice a thickness of the first outer adhesive paper from a sum of thicknesses of the positive tab, the first positive tab adhesive paper, the second positive tab adhesive paper, twice a thickness of the positive electrode current collector, and twice a thickness of the separator is greater than or equal to -5 µm and less than or equal to 5 µm.

12. The battery according to claim 8, wherein an end portion of a winding head end of the positive electrode region uncoated with foil extends to a region between the positive tab and the second tab, a protective adhesive paper is disposed on each of two opposite sides of the winding head end of the positive electrode region uncoated with foil, and two protective adhesive papers are located in a region between the positive tab and the second tab.
